# EUROPÄISCHE PATENTSCHRIFT

(11) **EP 1 985 559 B1**
(45) Veröffentlichungstag und Bekanntmachung des Hinweises auf die Patenterteilung: **28.08.2013**
(21) Anmeldenummer: 08003769.0
(22) Anmeldetag: 29.02.2008
(51) Int. Cl.: B65G 49/06

(54) **Verfahren und Vorrichtung zum Aufbringen von Trennmitteln auf Flachglaselemente**
Method and device for applying parting agent to flat glass elements
Procédé et dispositif destinés à l'application d'agents de séparation sur des éléments de verre plat

(30) Priorität: 24.04.2007 DE 102007019271
(43) Veröffentlichungstag der Anmeldung: 29.10.2008
(73) Patentinhaber: Grafotec Spray Systems GmbH, 86420 Diedorf (DE)
(72) Erfinder: Senft, Reinhold, 86157 Augsburg (DE)
(74) Vertreter: Munk, Ludwig

(56) Entgegenhaltungen:
- DE-A1- 4 103 283
- US-A- 3 693 321
- US-A- 5 695 876

## Beschreibung

Die Erfindung betrifft gemäß einem ersten Erfindungsgedanken ein Verfahren zum Aufbringen von Trennmitteln auf Flachglaselemente, die von einer Transportstrecke abgenommen und an einen Stapel angelegt werden, und die auf wenigstens einer Seite mit einem puderförmigen Trennmittel versehen werden, das durch Düsen aufgebracht wird.

Ein weiterer Erfindungsgedanke betrifft eine Vorrichtung zur Durchführung des Verfahrens mit wenigstens einem zwischen einer Transportstrecke für aufeinander folgende Flachglaselemente und wenigstens einem Stapelgestell zur Aufnahme wenigstens eines durch aufeinander gestapelte Flachglaselemente gebildeten Stapel hin- und herbewegbaren Förderorgan, das mit Saugern zur Aufnahme eines Flachglaselements versehen ist, und mit einer mit Düsen versehenen Auftragseinrichtung zur Beaufschlagung wenigstens einer Seite der Flachglaselemente mit einem Trennmittel.

Das Trennmittel soll verhindern, dass aufeinander gelegte Glasscheiben sich aneinander festsaugen bzw. aneinander scheuern. Als Trennmittel findet in der Regel puderförmiges Material Verwendung, das die nötige Separierung bewirkt. Bisher erfolgt der Auftrag des Trennmittels auf die Glasscheiben mittels einer der Transportstrecke zugeordneten Auftrageinrichtung, die von den aufeinander folgenden Glasscheiben nacheinander durchlaufen wird. Anschließend werden die mit dem Trennmittel versehenen Glasscheiben von der Transportstrecke abgenommen und zu einem Stapelaufnahmegestell gebracht und dort abgestapelt. Diese Umsetzung der Glasscheiben erfolgt mit einer vergleichsweise hohen Geschwindigkeit. Die Folge davon ist, dass aufgrund des entstehenden Fahrtwinds ein großer Teil des auf die Glasscheiben aufgebrachten Trennmittels weggeblasen wird, so dass der Trennmittelauftrag ausgemagert und mangelhaft wird. Hierdurch wird die nötige Separierung der aufeinander gelegten Glasscheiben beeinträchtigt. Außerdem ist viel Trennmittel verloren. Das weggeblasene Trennmittel schlägt sich in der Umgebung nieder, wodurch sich eine starke Verschmutzung der maschinellen Einrichtungen ergibt und die Wartung der betroffenen Maschinen erschwert sowie einen Schutz des Personals gegen das in der Luft verteilte, puderförmige Trennmittel erfordert. Bisher wurde versucht, die nötige Separierung trotz des nicht vermeidbaren Verlusts an Trennmittel durch eine Erhöhung der aufgebrachten Menge zu gewährleisten. Hierdurch werden jedoch die anderen Nachteile noch verschärft, vom Materialverbrauch ganz abgesehen.

Neben puderförmigem Trennmittel kann auch Trennmittel in Form von Papier gemäß der US 3,693,321 verwendet werden. Die darin beschriebene Vorrichtung zum Packen von Glasscheiben mit Zwischenlagen aus Papier weist eine Achse mit einer Papierrolle auf, die an einem oberen Wagen der Vorrichtung aufgehängt ist. Dabei wird beim Stapeln der Glasscheiben aufeinander jeweils eine Papierlage zwischen den Glasscheiben eingebracht, so dass diese nicht aneinanderreiben.

Ein Trennmittel aus einer wässrigen, Säure beinhaltenden Zusammensetzung zum Aufbringen auf eine Glasoberfläche beim Aufeinanderstapeln von mehreren Glasscheiben ist aus der US 5,695,876 bekannt.

Aus der DE 41 03 283 A1 ist ein Trennmittel bekannt, das aus einem pulverförmigen Stoff besteht, der mit einem Puffersystem kombiniert wird und einen Indikator in Form von Phenolphthalein enthält und in aufgeschlämmter Form auf Glaselemente aufgebracht werden kann. Durch Verfärben des Trennmittelmaterials kann zudem der Korrosionsprozess eingeschätzt werden.

Hiervon ausgehend ist es daher die Aufgabe der vorliegenden Erfindung, ein Verfahren und eine Vorrichtung nach dem Oberbegriff von Anspruch 1 mit einfachen und kostengünstigen Mitteln so zu verbessern, dass das auf die Flachglaselemente aufgebrachte Trennmittel weitestgehend auf diesen erhalten bleibt.

Diese Aufgabe wird in Verbindung mit dem gattungsgemäßen Verfahren erfindungsgemäß dadurch gelöst, dass der Auftrag des Trennmittels auf ein Flachglaselement erst erfolgt, nach dem dessen Beförderung von der Transportstrecke zum Stapel zumindest weitgehend abgeschlossen ist und es sich bereits im Bereich des Stapels befindet.

In Verbindung mit der gattungsgemäßen Vorrichtung wird die genannte Aufgabe erfindungsgemäß dadurch gelöst, dass die zum Auftrag des Trennmittels vorgesehenen Düsen dem mit Saugern versehenen Förderorgan zugeordnet sind.

Mit diesen Maßnahmen werden die eingangs geschilderten Nachteile der bisherigen Arbeitsweise vollständig beseitigt. Da der Auftrag des Trennmittels erst im Bereich des Stapels erfolgt, sind die Flachglaselemente während der Beförderung von der Transportstrecke zum Stapel noch ohne Trennmittel. Der bei höheren Geschwindigkeiten nicht vermeidbare Fahrtwind kann hier daher keinen Verlust an Trennmittel bewirken. Die Flachglaselemente können daher mit vergleichsweise hoher Geschwindigkeit von der Transportstrecke zum Stapelgestell befördert werden, ohne dass dies zu einer Steigerung des Verlusts an Trennmittel führen würde. Da kein Trennmittel in die Umgebung weggeblasen wird, bleibt diese in vorteilhafter Weise unverschmutzt, was die Wartung der maschinellen Einrichtungen vereinfacht und einen zusätzlichen Staubschutz für das Personal entbehrlich macht. Da kein nennenswerter Verlust an Trennmittel zu befürchten ist, genügt in vorteilhafter Weise auch eine vergleichsweise geringe Auftragmenge, um die gewünschte Separierung zu gewährleisten. Diese Materialeinsparung sowie der Wegfall der Verschmutzung der Umgebung und die zulässige, hohe Beförderungsgeschwindigkeit ergeben insgesamt eine vergleichsweise hohe Wirtschaftlichkeit.

Vorteilhafte Ausgestaltungen und zweckmäßige Fortbildungen der übergeordneten Maßnahmen sind in den Unteransprüchen angegeben. So können die Flachglaselemente zur Beförderung von der Transportstrecke zum Stapel durch ein mit Saugern versehenes Förderorgan erfasst werden, wobei das Trennmittel durch dem Förderorgan zugeordnete Düsen aufgebracht wird, und wobei das Förderorgan, nachdem das oberste Flachglaselement auf dem Stapel abgelegt ist, eine zur Stapeloberfläche parallele Bewegung aufführt, wobei die Düsen mit Trennmittel beaufschlagt werden. Das Förderorgan ist in der Regel gesteuert, so dass die hier vorgeschlagene, zusätzliche Sprühbewegung vergleichsweise einfach bewerkstelligt werden kann. In Folge der zur Stapeloberfläche parallelen Bewegung des Förderorgans und damit auch der hierauf aufgenommenen Düsen wird in vorteilhafter Weise eine zuverlässige Beaufschlagung der gesamten Oberfläche des betroffenen Flachglaselements erreicht.

In weiterer Fortbildung der übergeordneten Maßnahmen können die Düsen auf dem Förderorgan verstellbar angeordnet und/oder selektiv aktivierbar sein. Hierdurch lässt sich die Position der mit Trennmittel beaufschlagten Düsen der Form des zu beaufschlagenden Flachglaselements anpassen, wodurch Verluste vermieden werden.

Vorteilhaft kann das Förderorgan als flächenhafter, mit Saugern und Düsen versehener, vorzugsweise rahmenförmiger Träger ausgebildet sein, der mittels eines zugeordneten Bewegungsaggregats manövrierbar ist, bei dem es sich zweckmäßig um einen Roboterarm handeln kann. Ein Roboter ermöglicht in vorteilhafter Weise eine hohe Arbeitsgeschwindigkeit, was geringe Taktzeiten ermöglicht, sowie eine einfache Bewegungssteuerung, was eine einfache Bewerkstelligung der zur Stapeloberseite flächenparallelen Sprühbewegung ermöglicht.

In weiterer Fortbildung der übergeordneten Maßnahmen kann den Düsen jeweils eine elektrostatische Ladungsquelle zugeordnet sein. Hierdurch wird eine elektrostatische Aufladung des Trennmittels und damit eine gute Haftfähigkeit des Trennmittels erreicht.

Zusätzlich oder alternativ zu den auf den mit Saugern versehenen Träger aufgenommenen Düsen können auch dem Stapelgestell zugeordnete, mit Trennmittel beaufschlagbare Düsen vorgesehen sein. Das Stapelgestell stellt ein stationäres Bauteil dar. Die diesem zugeordneten Düsen erleichtern die Zuführung des Trennmittels.

Weitere vorteilhafte Ausgestaltungen und zweckmäßige Fortbildungen der übergeordneten Maßnahmen sind in den restlichen Unteransprüchen angegeben und aus der nachstehenden Beispielsbeschreibung anhand der Zeichnung näher entnehmbar.

In der nachstehend beschriebenen Zeichnung zeigt:

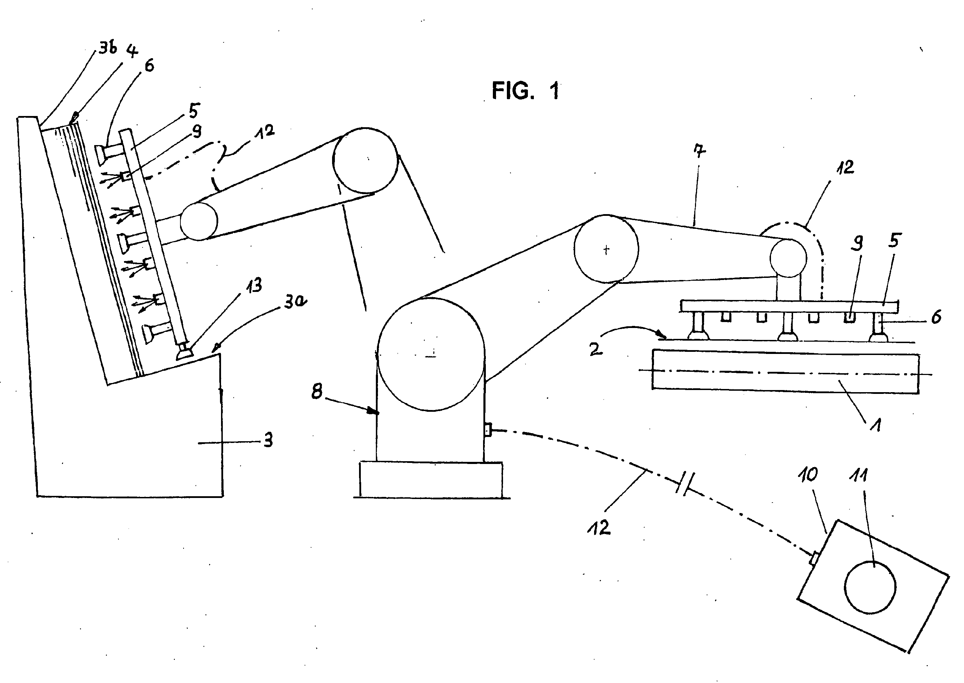

- Figur 1: eine schematische Darstellung einer Vorrichtung zum Abstapeln von Flachglaselementen.

Hauptanwendungsgebiet der Erfindung sind Anlagen zur Herstellung von Flachglasscheiben.

Die dargestellte Vorrichtung enthält eine durch ein Förderband oder eine Rollenbahn etc. gebildete Transportstrecke 1, auf der aufeinanderfolgende Flachglaselemente 2 in Form rechteckiger Glasscheiben transportiert werden. Neben der Transportstrecke 1 ist wenigstens ein Stapelgestell 3 angeordnet, auf dem die Flachglaselemente 2 in Form eines stehenden Stapels 4 abgelegt werden. Das Stapelgestell 3 ist stuhlartig aufgebaut und enthält dementsprechend eine zur Vertikalen geneigte Lehne 3b, die mit einer unter einem rechten Winkel hieran anschließenden Basis 3a einen dem Stapel 4 zugeordneten Stapelraum begrenzt. Der Stapel 4 ist mit seiner Rückseite an die Lehne 3 b angelehnt und ruht mit der Unterseite auf der Basis 3a. Der Stapel 4 wird durch aufeinander gestapelte Flachglaselemente 2 gebildet.

Die Flachglaselemente 2 werden mittels eines zwischen der Transportstrecke 1 und dem Stapelgestell 3 verkehrenden Förderorgans 5 von der Transportstrecke 1 abgenommen und auf dem Stapelgestell 3 abgestapelt. Das Förderorgan 5 ist als ein mit Saugern 6 versehener Saugrahmen ausgebildet, der mittels eines zugeordneten Bewegungsaggregats manövrierbar ist. Dabei kann es sich um einen sogenannten Horizontal-Stabler handeln. Im dargestellten Beispiel ist der das Förderorgan 5 bildende Saugrahmen am Arm 7 eines zwischen der Transportstrecke 1 und dem Stapelgestell 3 positionierten Roboters 8 angebracht. Der das Förderorgan 5 aufnehmende Arm 7 wird, wie in der Zeichnung angedeutet ist, von der rechts gezeichneten Aufnahmestellung in die links angedeutete Abgabestellung bewegt und umgekehrt.

Um sicherzustellen, dass die zur Bildung des Stapels 4 aufeinander gestapelten Flachglaselemente 2 nicht aneinander scheuern und sich nicht aneinander festsaugen und sich wieder separieren lassen, wird zwischen die Flachglaselemente 2 ein Trennmittel eingebracht. Dabei handelt es sich um ein puderförmiges Material, vorzugsweise um einen aus Polymethylmethacrylat (PMMA) bestehenden Puder. Dieser besteht aus kugelförmigen Kömern mit einem Durchmesser von 20 bis 200 µ. Zweckmäßig kann das Trennmittel auch eine Säure wie Adipin- und/ oder Borsäure enthalten, um einen zusätzlichen Korrosionsschutz für das Glas zu erreichen.

Der Roboter 8 ermöglicht eine vergleichsweise hohe Geschwindigkeit des zwischen der Transportstrecke und dem Stapelgestell 3 hin- und herbewegbaren Förderorgans 5. Um sicherzustellen, dass das Trennmittel in Folge dieser hohen Geschwindigkeit nicht bereits auf dem Weg zwischen Transportstrecke 1 und Sta pelgestell 3 verloren geht, erfolgt der Auftrag des Trennmittels auf die Flachglaselemente 2 erst im Bereich des Stapelgestells 3 bzw. Stapels 4, d.h. erst nachdem die Beförderung des betreffenden Flachglaselements von der Transportstrecke 1 zum Stapel 4 zumindest weitestgehend abgeschlossen ist und das Flachglaselement 2 sich bereits im Bereich des Stapels 4 befindet. Zweckmäßig wird das Trennmittel jeweils auf die die Stapeloberseite bildende Oberseite des zuletzt abgestapelten Flachglaselements 2 aufgetragen.

Der Auftrag des Trennmittels erfolgt durch Düsen 9, die mit Luft und Trennmittel beaufschlagbar sind, so dass dieses aufgeblasen wird, wie in Figur 1 links durch Pfeile angedeutet ist. Die Düsen 9 können dem Stapelgestell 3 zugeordnet sein, d.h. am Stapelgestell 3 angebracht sein. Im dargestellten Beispiel sind die Düsen 9 auf dem das Förderorgan 5 bildenden Saugrahmen angeordnet. Die Düsen 9 können dabei vorteilhaft verstellbar angeordnet sein, so dass die Position der Düsen 9 an die Form bzw. Größe der jeweils verarbeiteten Flachglaselemente 2 angepasst werden kann. Es wäre auch denkbar, die Düsen 9 auf dem Förderorgan 5 fest anzuordnen und jeweils nur in Abhängigkeit von der Größe der verarbeiteten Flachglaselemente 2 benötigten Düsen 9 mit Trennmittel zu beaufschlagen. Alle vorhandenen Düsen werden mit Luft beaufschlagt, doch nur die benötigten Düsen bleiben beim Trennmittelauftrag geöffnet und fördern das Trennmittel. Diese selektive Auswahl der jeweils benötigten Düsen kann durch Steuerbefehle bewerkstelligt werden, was die Bedienung vereinfacht.

Zum Aufnehmen eines Flachglaselements 2 werden die Sauger mit Vakuum beaufschlagt. Zum Ablegen eines aufgenommenen Flachglaselements 2 auf dem Stapel 4 werden die Sauger mit Blasluft beaufschlagt, so dass das mittels des Förderorgans 5 an den Stapel 4 angestellte Flachglaselement 2 von den Saugern 6 gelöst wird. Zur Beaufschlagung der die Stapeloberseite bildenden Oberseite des gerade abgeblasenen Flachglaselements mit Trennmittel wird das Förderorgan 5 anschließend an den Abblasvorgang ein kleines Stück von der Stapeloberfläche weg bewegt und dann flächenparallel zur Stapeloberseite auf- und ab bzw. hin- und herbewegt, während die Düsen 6 bzw. die selektiv ausgewählten Düsen 6 mit Trennmittel beaufschlagt werden. Mit Hilfe des Roboters 8 kann die genannte auf- und abgehende bzw. hin- und hergehende, zur Stapeloberseite parallele Sprühbewegung des Förderorgans 5 auf einfache Weise bewerkstelligt werden. Mit Hilfe dieser Sprühbewegung kann auch mittels eines im Vergleich zur Fläche der Flachglaselemente 2 kleinen Förderorgane 5 die gesamte Oberfläche des benachbarten Flachglaselements 2 zuverlässig mit Trennmittel beaufschlagt werden.

Das Trennmittel wird in einem geeigneten Bereitstellungsaggregat 10 bereit gestellt und dosiert. Dieses befindet sich zweckmäßig außerhalb des Gefahrenbereichs des Roboters 8, so dass eine gefahrenfreie Bedienung möglich ist, wie durch einen Trichter 11 angedeutet ist. Das Bereitstellungsaggregat 10 ist durch bewegliche Schläuche 12, die über das Robotergestell und den Roboterarm zu den Düsen 9 führen, mit diesen verbunden. Zur Erzielung einer guten Haftung des aufgebrachten Trennmittels an der die Stapeloberseite bildenden Fläche des zuletzt abgestapelten Flachglaselements 2 kann den Düsen 9 jeweils eine elektrostatische Ladungsquelle zugeordnet sein, durch welche das Trennmittel elektrostatisch aufgeladen wird.

Beim Auftragvorgang nicht an der beaufschlagten Oberfläche haftendes Trennmittel gelangt auf die den Stapel 4 aufnehmende Basisfläche 3a des Stapelgestells 3. Dieses Trennmittel kann zur Vermeidung einer Verschmutzung aufgesaugt und vorzugsweise in die Bereitstellungseinrichtung 10 zurückgeführt werden, wodurch der Materialverbrauch reduziert werden kann. Hierzu kann das Stapelgestell 3 mit geeigneten Saugdüsen versehen sein. Zweckmäßig kann das Förderorgan 5 mit zum Absaugen der Basis 3a des Stapelgestells 3 geeigneten Saugdüsen 13 versehen sein. Zweckmäßig kann das Förderorgan 5 zum Absaugen der Basis 3a mittels der Saugdüsen 13 geeignete, beispielsweise hin- und hergehende, bzw. vor- und zurückgehende Bewegungen durchführen. Dies kann einfach durch entsprechende Steuerung des Roboters 8 bewerkstelligt werden. Der Absaugvorgang kann vor oder nach der Trennmittelbeaufschlagung jedes abgestapelten Flachglaselements 2 erfolgen. In der Regel wird es jedoch ausreichen, wenn der Absaugvorgang sporadisch nur nach einer bestimmten Anzahl von Abstapelvorgängen durchgeführt wird.

## Patentansprüche

1. Verfahren zum Aufbringen von Trennmitteln auf Flachglaselemente (2), die von einer Transportstrecke (1) abgenommen und an einen Stapel (4) angelegt werden und die wenigstens auf einer Seite mit einem puderförmigen Trennmittel versehen werden, das durch Düsen (9) aufgebracht wird, **dadurch gekennzeichnet, dass** der Auftrag des Trennmittels auf ein Flachglaselement (2) erst erfolgt, nachdem dessen Beförderung von der Transportstrecke (1) zum Stapel (4) zumindest weitgehend abgeschlossen ist und es sich bereits im Bereich des Stapels (4) befindet.

2. Verfahren nach Anspruch 1, **dadurch gekennzeichnet, dass** das Trennmittel zumindest auf die die Stapeloberseite bildende Oberseite des zuletzt abgestapelten Flachglaselements (2) aufgetragen wird, wobei vorzugsweise die Flachglaselemente (2) zur Beförderung von der Transportstrecke (1) zum Stapel (4) durch ein mit Saugern (6) versehenes Förderorgan (5) erfasst werden und das Trennmittel durch Düsen (9) des Förderorgans (5) aufgebracht wird, das, nachdem das oberste Flachglaselement (2) auf dem Stapel (4) abgelegt wurde, eine zur Stapeloberseite parallele Bewegung ausführt, wobei die Düsen (9) mit Trennmittel beaufschlagt werden.

3. Vorrichtung zur Durchführung des Verfahrens nach einem der vorhergehenden Ansprüche mit wenigstens einem zwischen einer Transportstrecke (1) für aufeinanderfolgende Flachglaselemente (2) und wenigstens einem Stapelgestell (3) zur Aufnahme wenigstens eines durch aufeinander gestapelte Flachglaselemente (2) gebildeten Stapels (4) hin- und herbewegbaren Förderorgan (5), das mit Saugern (6) zur Aufnahme eines Flachglaselements (2) versehen ist, und mit einer mit Düsen (9) versehenen Auftrageinrichtung zur Beaufschlagung wenigstens einer Seite der Flachglaselemente (2) mit einem Trennmittel, **dadurch gekennzeichnet, dass** die Düsen (9) dem mit Saugern (6) versehenen Förderorgan (5) zugeordnet sind.

4. Vorrichtung nach Anspruch 3, **dadurch gekennzeichnet, dass** die Düsen (9) auf dem Förderorgan (5) verstellbar angeordnet und/oder selektiv aktivierbar sind.

5. Vorrichtung nach einem der Ansprüche 3 oder 4, **dadurch gekennzeichnet, dass** das Förderorgan (5) als flächenhafter, mit Saugern (6) und Düsen (9) versehener, vorzugsweise rahmenförmiger Träger ausgebildet ist, der mittels eines zugeordneten Bewegungsaggregats manövrierbar, vorzugsweise am Arm (7) eines Roboters (8) angebracht ist.

6. Vorrichtung nach Anspruch 7, **dadurch gekennzeichnet, dass** das vorzugsweise als Roboter (8) ausgebildete Bewegungsaggregat so steuerbar ist, dass der Träger (5) bei der nach Beendigung eines Stapelvorgangs erfolgenden Rückführbewegung bis auf eine vorgegebene Entfernung von der Stapeloberseite abgehoben wird und dass dann wenigstens eine Düse (9) aktiviert wird, wobei vorzugsweise der von der Stapeloberseite distanzierte Träger (5) bei aktivierter Düse bzw. aktivierten Düsen (9) eine zur Stapeloberseite parallele Bewegung ausführt.

7. Vorrichtung nach einem der vorhergehenden Ansprüche 3 bis 6, **dadurch gekennzeichnet, dass** die Düsen (9) über wenigstens eine zumindest teilweise bewegliche Leitung (12) mit einem außerhalb des Gefahrenbereichs des Bewegungsaggregats angeordneten Bereitstellungsaggregat (10) verbunden sind, das mit einer Dosiereinrichtung versehen ist und dass den Düsen (9) vorzugsweise jeweils eine elektrostatische Ladungsquelle zugeordnet ist.

8. Vorrichtung nach einem der vorhergehenden Ansprüche 3 bis 7, **dadurch gekennzeichnet, dass** beim Auftrag des Trennmittels alle Düsen (9) mit Luft beaufschlagbar sind und dass jede selektiv ausgewählte Düse (9) zusätzlich mit Trennmittel beaufschlagbar ist.

9. Vorrichtung nach einem der vorhergehenden Ansprüche 3 bis 8, **dadurch gekennzeichnet, dass** der Träger (5) wenigstens eine Saugdüse (13) zur Reinigung des Stapelgestells (3) aufweist.

10. Vorrichtung insbesondere nach einem der vorhergehenden Ansprüche 3 bis 9, **dadurch gekennzeichnet, dass** dem Stapelgestell (3) mit Trennmittel beaufschlagbare Blasdüsen und/oder Saugdüsen zum Aufsaugen von auf das Stapelgestell (3) gelangendem Trennmittel zugeordnet sind.

## Claims

1. A method for applying parting agents to flat glass elements (2) which are detached from a transportation section (1) and laid against a stack (4), and which are provided with a powder-like parting agent on at least one side, which is applied through nozzles (9), **characterized in that** the parting agent is applied to a flat glass element (2) after its transport from the transportation section (1) to the stack (4) is largely terminated, and it is already in the area of the stack (4).

2. A method in accordance with claim 1, **characterized in that** the parting agent is applied to at least the upper side of the flat glass element (2) most recently stacked forming the upper side of the stack, with the flat glass elements (2) preferably being seized by a conveying element (5) provided with suction cups (6) for the purpose of transporting the flat glass elements (2) from the transportation section (1) to the stack (4), and further that the parting agent is applied through nozzles of the conveying element (5) which, after the uppermost flat glass element (2) has been placed on the stack (4), carries out a movement parallel to the upper side of the stack, with the nozzles (9) being supplied with parting agent.

3. A device for carrying out the said method in accordance with any of the preceding claims comprising at least one conveying element (5) reciprocating between a transportation section (1) for successive flat glass elements (2) and at least one stack rack (3) for receiving at least one stack (4) formed by flat glass elements (2) stacked on top of each other, such conveying element (5) being provided with suction cups (6) for receiving a flat glass element (2), and further with an application device provided with nozzles (9) for the purpose of applying a parting agent to at least one side of the flat glass elements (2), **characterized in that** the nozzles (9) are associated with the conveying element (5) which are provided with suction cups (6).

4. A device in accordance with claim 3, **characterized in that** the nozzles (9) are adjustably arranged on the conveying element (5) and/or are selectively activatable.

5. A device in accordance with any of the claims 3 or 4, **characterized in that** the conveying element (5) is designed as a planar preferably frame-like carrier provided with suction cups (6) and nozzles (9), which is manoeuvrable by means of an associated moving means and preferably mounted on the arm (7) of a roboter (8).

6. A device in accordance with claim 7, **characterized in that** the moving means, preferably designed as a roboter (8), is controllable in such a manner that the carrier (5), when moved back after terminating a stacking process, is raised to a defined distance from the upper side of the stack, and that then at least one nozzle (9) is activated, with preferably the carrier (5) distanced from the upper side of the stack carries out a movement parallel to the upper side of the stack while the nozzle and/or nozzles (9) are activated.

7. A device in accordance with any of the preceding claims 3 to 6, **characterized in that** the nozzles (9) are connected via at least one partially movable line (12) with a provision means (10) provided outside of the hazardous area of the moving means which is provided with a dosing means, and further that each of the nozzles (9) is preferably associated with an electrostatic charge source.

8. A device in accordance with any of the preceding claims 3 to 7, **characterized in that** during the application of the parting agent all nozzles (9) are suppliable with air, and that each selectively selected nozzle (9) is additionally suppliable with parting agent.

9. A device in accordance with any of the preceding claims 3 to 8, **characterized in that** the carrier (5) comprises at least one suction nozzle (13) for the purpose of cleaning the stack rack (3).

10. A device particularly in accordance with any of the preceding claims 3 to 9, **characterized in that** the stack rack (3) is associated with blow nozzles suppliable with parting agent and/or suction nozzles for sucking up any parting agent that may have been spilled onto the rack track (3).

## Revendications

1. Procédé d'application d'agents de séparation sur des éléments de verre plat (2) qui sont retirés d'un trajet de transport (1) et appliqués contre une pile (4) et qui sont pourvus sur au moins une face d'un agent de séparation sous forme de poudre qui est appliqué par le biais de buses (9), **caractérisé par le fait que** l'application de l'agent de séparation sur un élément de verre plat (2) n'est réalisée qu'après avoir terminé, au moins dans une large mesure, son transport depuis ledit trajet de transport (1) vers la pile (4) et qu'il se trouve déjà au niveau de ladite pile (4).

2. Procédé selon la revendication 1, **caractérisé par le fait que** ledit agent de séparation est appliqué au moins sur la face supérieure formant face supérieure de la pile, de l'élément de verre plat (2) qui est mis le dernier sur la pile, de préférence les éléments de verre plat (2) étant saisis par un organe de transport (5) pourvu de ventouses (6) pour être transportés depuis le trajet de transport (1) vers la pile (4) et l'agent de séparation étant appliqué par le biais de buses (9) dudit organe de transport (5) qui, après que l'élément de verre plat (2) situé le plus en haut a été posé sur la pile (4), exerce un mouvement parallèle à la face supérieure de la pile, les buses (9) étant alimentées en agent de séparation.

3. Dispositif de mise en oeuvre du procédé selon l'une quelconque des revendication précédentes, avec au moins un organe de transport (5) qui peut être animé d'un mouvement de va-et-vient entre un trajet de transport (1) pour des éléments de verre plat (2) successifs et au moins un bâti d'empilage (3) destiné à recevoir au moins une pile (4) formée par des éléments de verre plat (2) empilés les uns sur les autres, et qui est pourvu de ventouses (6) de réception des éléments de verre plat (2), et avec un dispositif d'application pourvu de buses (9) et destiné à alimenter au moins une face des éléments de verre plat (2) en un agent de séparation, **caractérisé par le fait que** lesdites buses (9) sont associées à l'organe de transport (5) pourvu de ventouses (6).

4. Dispositif selon la revendication 3, **caractérisé par le fait que** les buses (9) sont disposées sur ledit organe de transport (5) de manière à pouvoir être réglées et/ou peuvent être activées sélectivement.

5. Dispositif selon l'une quelconque des revendications 3 ou 4, **caractérisé par le fait que** ledit organe de transport (5) est réalisé en tant que support en nappe, de préférence en forme de cadre, qui est pourvu de ventouses (6) et de buses (9) et qui est manoeuvrable au moyen d'un groupe de mouvement associé, de préférence est monté sur le bras (7) d'un robot (8).

6. Dispositif selon la revendication 7, **caractérisé par le fait que** ledit groupe de mouvement réalisé de préférence en tant que robot (8) peut être commandé de manière à ce que le support (5), lors du mouvement de retour effectué après avoir terminé une opération d'empilage, soit soulevé jusqu'à une distance donnée de la face supérieure de la pile et que, ensuite, au moins une buse (9) est activée, de préférence, lorsque la buse ou bien les buses (9) est/sont activée(s), le support (5) se trouvant à distance de la face supérieure de la pile exerçant un mouvement parallèle à la face supérieure de la pile.

7. Dispositif selon l'une quelconque des revendications précédentes 3 à 6, **caractérisé par le fait que** les buses (9) sont reliées, par au moins une conduite (12) au moins en partie mobile, à un groupe de mise à disposition (10) qui est disposé hors de la zone de danger dudit groupe de mouvement et qui est muni d'un dispositif de dosage, et que, de préférence, respectivement une source de charge électrostatique est associée aux buses (9).

8. Dispositif selon l'une quelconque des revendications précédentes 3 à 7, **caractérisé par le fait que** toutes les buses (9) peuvent être alimentées en air lors de l'application de l'agent de séparation et que chaque buse (9) choisie de manière sélective peut être alimentée en sus en agent de séparation.

9. Dispositif selon l'une quelconque des revendications précédentes 3 à 8, **caractérisé par le fait que** ledit support (5) présente au moins une buse d'aspiration (13) pour le nettoyage dudit bâti d'empilage (3).

10. Dispositif en particulier selon l'une quelconque des revendications précédentes 3 à 9, **caractérisé par le fait que** des buses de soufflage aptes à être alimentées en agent de séparation et/ou des buses d'aspiration destinées à aspirer de l'agent de séparation qui atteint ledit bâti d'empilage (3) sont associées au bâti d'empilage (3).
